# EUROPÄISCHE PATENTSCHRIFT

(11) **EP 2 493 759 B1**
(45) Veröffentlichungstag und Bekanntmachung des Hinweises auf die Patenterteilung: **30.11.2016**
(21) Anmeldenummer: 10770828.1
(22) Anmeldetag: 27.10.2010
(51) Int. Cl.: B64D 11/00

(54) **BEFESTIGUNGSANORDNUNG ZUM BEFESTIGEN EINER BAUEINHEIT AN EINEM FLUGZEUGRUMPF**
FASTENING ARRANGEMENT FOR FASTENING A COMPONENT ON A FUSELAGE
SYSTÈME DE FIXATION POUR FIXER UNE UNITÉ MODULAIRE À UN FUSELAGE

(30) Priorität: 27.10.2009 DE 102009050736; 27.10.2009 US 255396 P
(43) Veröffentlichungstag der Anmeldung: 05.09.2012
(73) Patentinhaber: Airbus Operations GmbH, 21129 Hamburg (DE)
(72) Erfinder: WENZEL, Henryk, 14532 Kleinmachnow (DE); UMLAUFT, Sebastian, 22767 Hamburg (DE)
(74) Vertreter: Kopf Westenberger Wachenhausen Patentanwälte PartG mbB
(86) Internationale Anmeldenummer: PCT/EP2010/066208
(87) Internationale Veröffentlichungsnummer: WO 2011/051308

(56) Entgegenhaltungen:
- WO-A2-2009/098098
- DE-A1- 19 714 996
- US-A- 3 111 207
- US-A- 3 525 490
- US-A- 3 994 451
- US-A- 5 974 760
- US-A1- 2002 150 747
- US-A1- 2007 044 415
- US-B1- 6 173 550

## Beschreibung

### TECHNISCHES GEBIET

Die vorliegende Erfindung betrifft eine Befestigungsanordnung zum Befestigen einer Baueinheit an einem Flugzeugrumpf, ein mit einer solchen Befestigungsanordnung ausgestattetes Flugzeug sowie ein Verfahren zum Herstellen einer derartigen Befestigungsanordnung.

### HINTERGRUND DER ERFINDUNG

In Flugzeugen wird eine Vielzahl von Baueinheiten, die zur Gestaltung einer Flugzeugkabine beitragen, an Versteifungselementen des Flugzeugrumpfs angeordnet. Die Versteifungselemente sind dabei häufig als sogenannte Spante, die in regelmäßigen Abständen quer zur Längsachse des Flugzeugrumpfs angeordnet sind und durch sogenannte Stringer, die in regelmäßigen Abständen voneinander beabstandet in Längsrichtung des Flugzeugrumpfs angeordnet sind, gebildet. So werden etwa Über-Kopf-Staufächer in Flugzeugkabinen eingebaut, die sich beispielhaft über vier nebeneinander angeordnete Spante erstrecken und mittels fünf oder mehr Halter entsprechend an den Spanten und an Stringern befestigt werden. Dies ist verhältnismäßig mühsam, da das Anfertigen von Bohrungen, das Entgraten der Bohrungen, das Montieren der Über-Kopf-Staufächer und deren Ausrichtung mit hohem personellen und zeitlichem Aufwand verbunden ist. Zusätzlich dazu könnten die unterschiedlichen Halter und Befestigungselemente, die zum Anbinden an die Versteifungselemente erforderlich sind, zu einem höheren Gesamtgewicht des Flugzeugs beitragen.

Weiterhin sind die Anforderungen an die Befestigungsanordnungen hinsichtlich der aufzunehmenden Lasten nicht unerheblich, da nach JAR 25.561 oder anderen Richtlinien mit maximal wirkenden Beschleunigungen von 9g in Flugzeuglängsrichtung (üblicherweise die x-Achse im flugzeugfesten Koordinatensystem) für den Fall von Notlandungen an Land oder zu Wasser gerechnet werden muss und beim Beispiel der Über-Kopf-Staufächer als Baueinheiten deren Beladung teilweise beträchtlich ist.

Zusätzlich dazu tragen thermische Schrumpf- und Ausdehnbewegungen des Flugzeugs sowie der zu befestigenden Baueinheiten sowie beim Flugbetrieb auftretende Biege- und Torsionsverformungen zur zusätzlichen Belastung der Primärstruktur des Flugzeugrumpfs bei.

In DE 10 2007 019 305 A1 und WO 2008 129 038 A1 wird eine Befestigungsanordnung zum Befestigen eines Bauteils an einem Flugzeugrumpf gezeigt, bei der ein länglicher Stringer an dem Flugzeugrumpf befestigbar ist und eine Mehrzahl von in Längserstreckungsrichtung hintereinander ausgebildeter Ausnehmungen aufweist, in die an Bauteilen befestigte Beschläge formschlüssig eingreifen können.

WO 2009/098098 A1 offenbart ein freitragendes, mechanisch von einer Rumpfzelle entkoppeltes Fußbodensystem für ein Flugzeug mit einer Vielzahl von Bodenelementen zur Bildung einer Fußbodenfläche unter Verwendung von mindestens zwei Längsträgern, die in einem unteren Bereich der Rumpfzelle befestigt werden.

Ein weiteres Beispiel des Standes der Technik ist in US 3 111 207 enthalten.

### ZUSAMMENFASSUNG DER ERFINDUNG

Es kann daher ein Bedarf an einer Befestigungsanordnung bestehen, die eine ausreichende Lastaufnahme bei gleichzeitig geringem Gewicht, einer möglichst geringen Anforderung an Bohrungen in der Primärstruktur und einer möglichst hohen Flexibilität bereitstellen soll.

Weiterhin könnte ein Bedarf an einer derartigen Befestigungsanordnung bestehen, die selbsttätig in der Lage ist, mechanische Bewegungen aufgrund von Flugmanövern oder Schrumpf- und Ausdehnbewegungen des Flugzeugrumpfs selbsttätig ausgleichen zu können, so dass eine Zerstörung der Befestigungsanordnung auch bei einer Materialmischung zwischen Faserverbundwerkstoffen und metallischen Werkstoffen vermieden wird.

Ferner kann ein Bedarf an einem mit einer entsprechenden Befestigungsanordnung ausgestatteten Flugzeug und an einem Verfahren zum Herstellen einer entsprechenden Befestigungsanordnung bestehen.

Diesem Bedarf kann durch den Gegenstand des Anspruchs 1 entsprochen werden. Vorteilhafte Weiterbildungen sind in den Unteransprüchen angegeben.

Gemäß einem ersten Aspekt der vorliegenden Erfindung wird eine Befestigungsanordnung zum Befestigen einer Baueinheit an einem Flugzeugrumpf nach Anspruch 1 vorgesehen.

Mit dem Begriff "Befestigungsanordnung" wird eine Kombination aus im Wesentlichen drei unterschiedlichen Elementen bezeichnet. Ein Basiselement mit einer länglichen Erstreckung dient zur Befestigung der Befestigungsanordnung mit einem Flugzeugrumpf und der gleichmäßigen Einleitung sämtlicher auftretenden Lasten. Das Basiselement ist bevorzugt aus dem gleichen Material gefertigt, wie der Flugzeugrumpf, so dass das Basiselement und der Flugzeugrumpf die gleichen Wärmeausdehnungseigenschaften aufweisen und dadurch ein unnötiges Auftreten von Wärmespannungen an der Verbindungsstelle zwischen dem Basiselement und dem Flugzeugrumpf vermieden werden kann. Sollte also der Flugzeugrumpf aus einem Faserverbundmaterial hergestellt sein, bietet es sich an, das Basiselement ebenfalls aus dem gleichen Faserverbundmaterial herzustellen und durch beliebige Verbindungsarten mit dem Flugzeugrumpf zu verbinden. Hierbei würden sich besonders Niet-, Schraub- und Klebeverbindungen eignen, wobei mit dem Begriff Klebeverbindung auch ein Einlaminieren oder dergleichen gemeint sein kann. Die Halterschiene ist derart ausgeführt, dass sie in einem bestimmten, vorgegebenen Abstand zu dem Basiselement angeordnet werden kann, wobei die Verbindung zwischen dem Basiselement und der Halterschiene durch die sogenannten Verbindungselemente realisiert werden. Das Material der Halterschiene kann dem Material des Basiselements entsprechen, es kann allerdings auch durch ein abweichendes Material ausgeführt sein. Bei Verwendung eines exemplarisch aus einem Faserverbundmaterial bestehenden Basiselements könnte etwa die Halterschiene hingegen aus einer Aluminiumlegierung hergestellt werden, die eine besonders flexible Realisierung von Halterungen von Bauteilen gewährleistet. Gemäß einer vorteilhaften Weiterbildung könnte die Halterschiene eine Rasterung aufweisen, wie sie von Fußbodenschienen für Flugzeugkabinen bekannt ist.

Durch die voneinander beabstandete Anordnung des Basiselements und der Halterschiene wird ermöglicht, unterschiedliche Wärmeausdehnungen der zu befestigenden Baueinheiten oder mechanische Lasten primär in ein separates Element in Form der Halterschiene einzuleiten, so dass eine weitgehende mechanische Entkopplung dieser Lasten von der Primärstruktur entstehen kann. Gleichzeitig wird durch das Bereitstellen einer Halterschiene eine völlig variable und von der Position von Versteifungselementen unabhängige Möglichkeit bereitgestellt, Baueinheiten innerhalb der Flugzeugkabine zu befestigen.

Das Basiselement kann gleichzeitig die Funktion eines Versteifungselements, etwa eines Längsversteifungselements (Stringer) für den Flugzeugrumpf übernehmen. Dadurch könnte ein separates Versteifungselement eingespart werden, was sich positiv auf die Gewichtsbilanz der erfindungsgemäßen Befestigungsanordnung auswirkt. Das Basiselement weist demnach bevorzugt ein Profil mit einem ausreichend hohen Flächenträgheitsmoment auf, das ferner dazu eingerichtet ist, mit den Verbindungselementen eine Verbindung einzugehen und hierfür bereichsweise etwa U-förmig, L-förmig oder mit einem ähnlichen Profil ausgestaltet ist. Die Verbindungselemente können dann mit einem oder mehreren Schenkeln oder Schenkelabschnitten des Profils des Basiselements eine Verbindung eingehen. Bevorzugt ist das Basiselement bzw. die erfindungsgemäße Befestigungsanordnung an einer Längsnaht des entsprechenden Flugzeugrumpfs angeordnet, so dass diese kontinuierlich verschlossen wird. Die Befestigungsanordnung könnte dementsprechend auch als Längsnahtstringer verwendet werden, so dass sich durch die Funktionsintegration deutliche Gewichtsvorteile ergeben können.

Gemäß der erfindungsgemäßen Befestigungsanordnung sind die Verbindungselemente fachwerkartig zwischen der Halterschiene und dem Basiselement angeordnet. Der Begriff "fachwerkartig" bezieht sich dabei auf eine sich zumindest in einem überwiegenden Bereich wiederholende Anordnung und Positionierung von Verbindungselementen in einer Zickzack- oder Kreuzanordnung aus mehreren Stäben, die zumindest paarweise an ihren Enden miteinander verbunden sind. Dazu weisen die Verbindungselemente jeweils ein erstes Ende und ein zweites Ende auf, wobei die ersten Enden mit dem Basiselement verbunden werden und die zweiten Enden mit der Halterschiene. Gemäß einer beispielhaften Ausführung sind jeweils zwei erste Enden zweier benachbarter Verbindungselemente an dem gleichen Punkt des Basiselements angeordnet, während zwei zweite Enden eines hiervon benachbarten Paars an einem gemeinsamen Punkt an der Halterschiene angeordnet sind. Dadurch ergibt sich bei exemplarisch länglicher Ausgestaltung der Verbindungselemente eine Zickzackstruktur.

Gemäß der erfindungsgemäßen Befestigungsanordnung sind Paare von Verbindungselementen vorgesehen, deren jeweilige zweite Enden miteinander verbunden sind, während die jeweiligen ersten Enden voneinander beabstandet sind. Beide Verbindungselemente eines Verbindungselementepaars sind zumindest bereichsweise konvex gekrümmt. Hierdurch wird dementsprechend ein Dreieck eines Fachwerks realisiert, dessen Seiten nach außen gekrümmt sind, so dass bei einer Verschiebung der zweiten Enden relativ zu den ersten Enden abhängig von der jeweiligen Belastungsrichtung ein Geradeziehen oder Durchbiegen des jeweiligen Verbindungselements in einer geführten, vorgegebenen Richtung erfolgt. Dementsprechend lassen sich über eine geometrische Vorkrümmung der Verbindungselemente vordefinierte Biegerichtungen und demnach präziser vorhersagbare Biege- bzw. Verformungsverhalten der Verbindungselemente realisieren. Gerade bei einer thermischen Ausdehnung einer Halterschiene gegenüber dem Basiselement kann dadurch eine sehr präzise Aufnahme von Schubspannungen mit vorbestimmtem Verformungsverhalten durch die Verbindungselemente erfolgen, ohne dass das Basiselement und damit die Primärstruktur des Flugzeugelements in Mitleidenschaft gezogen werden.

Dieser Effekt kann in einer vorteilhaften Weiterbildung der erfindungsgemäßen Befestigungsanordnung dadurch gesteigert werden, dass in einem ersten Bereich die Verbindungselemente eines Paars konvex und in einem zweiten Bereich konkav gekrümmt sind. Die dadurch erreichte sogenannte "S-Schlag-Form" fördert die definierte Auslenkung und dadurch vorhersagbare Biegelinien, so dass die Festigkeit der Verbindungselemente präziser durch Auslegung bestimmt werden kann.

In der erfindungsgemäßen Befestigungsanordnung verjüngen sich die einzelnen Verbindungselemente von ihren ersten Enden zu ihren zweiten Enden hin. Dadurch ist die an dem Basiselement befestigte Kante eines Verbindungselements deutlich breiter als die an der Halterschiene, so dass das Flächenträgheitsmoment zur Aufnahme von Lasten in der Verbindungselement-Ebene optimiert wird.

Gleichzeitig ist es für eine Verringerung des Gewichts eines Verbindungselements sinnvoll, mindestens eine Ausnehmung in jedem Verbindungselement vorzusehen. Die Ausnehmung könnte beispielsweise dreiecksförmig sein, wenn sich die Verbindungselemente von dem ersten Ende zum zweiten Ende hin verjüngen, so dass eine Form entsteht, die im Wesentlichen einem Dreieck ähnelt.

Zur Verbesserung der Fertigung ist in einer besonders vorteilhaften Weiterbildung der erfindungsgemäßen Befestigungsanordnung jeweils eine Einsatzbuchse an einem Paar von Verbindungselementen an miteinander verbundenen ersten Enden und/oder zweiten Enden angeordnet. Dadurch können die einzelnen Paare einstückig hergestellt werden, etwa durch Laminieren oder dergleichen. Durch das Vorsehen von Einsatzbuchsen ist es nicht erforderlich, eine hochkomplexe und damit teuere Berücksichtigung von Befestigungspunkten bei der Fertigung der Grundstruktur der Verbindungselemente vorzusehen, sondern diese können separat an die Verbindungselement angebunden werden.

In einer ebenso vorteilhaften Weiterbildung der erfindungsgemäßen Befestigungsanordnung sind die Verbindungselemente bereits in eine aus einem Fasermaterial gefertigte Primärstruktur des Flugzeugs oder in ein Basiselement integriert, vorteilhafterweise unter Verzicht auf Einsatzbuchsen. Dadurch könnte ein deutlich geringeres Gewicht der erfindungsgemäßen Befestigungsanordnung erzielt werden als mit separaten, miteinander zu verbindenden Elementen.

Gemäß einer vorteilhaften Weiterbildung der erfindungsgemäßen Befestigungsanordnung sind mehrere Verbindungselemente in Form eines einzigen Bauteils in einem Endlosverfahren hergestellt. Dadurch werden die Herstellkosten und die Bauteilvielfalt reduziert sowie die Montage der Verbindungselemente an das Basiselement und an der Halterschiene vereinfacht, da nicht eine Vielzahl einzelner Verbindungselemente gegriffen, angesetzt und befestigt werden müssen, sondern lediglich ein einzelnes Teil gehalten und sukzessive befestigt werden muss.

In einer vorteilhaften Weiterbildung der erfindungsgemäßen Befestigungsanordnung sind das Basiselement und die Verbindungselemente aus einem Faserverbundwerkstoff hergestellt. Dadurch eignet sich die erfindungsgemäße Befestigungsanordnung besonders zur Verwendung an einem Flugzeugrumpf aus einem Faserverbundmaterial.

Gleichzeitig ist besonders bevorzugt, die Halterschiene aus einem metallischen Werkstoff herzustellen. Dies könnte beispielsweise eine Aluminiumlegierung sein, wodurch keine Anpassungen von Befestigungsverfahren notwendig werden und weiterhin die Halterschiene als Masseleiter für elektrische Systeme verwendet werden kann, was besonders bei der Integration der Befestigungsanordnung in einem nichtmetallischen Rumpf von Vorteil wäre.

Die Halterschiene könnte zusätzlich Kanäle oder kanalartige Vertiefungen zum Aufnehmen von Kabeln und Leitungen aufweisen, wobei die kanalartigen Vertiefungen bevorzugt auf einer Seite der Befestigungsanordnung geöffnet sind, die dem Basiselement abgewandt ist. In diesen Kabelführungen können Kabel eingelegt und befestigt werden, wobei die Kabelführung neben der mechanischen Halterung insbesondere der Abschirmung indirekter Effekte bei Blitzeinschlägen dient. Bei Blitzeinschlägen könnte in Rümpfen aus Verbundmaterialien mit Kohlefasern oder dergleichen der Strom über feine Metallstrukturen in einem derartigen Rumpf-Laminat abgeleitet werden, wobei jedoch an der Einschlagstelle ein Feld entstehen könnte, welche Induktionsströme in metallischen Leitern auslösen kann. Die Abschirmung durch derartige Kabelführungen trägt dazu bei, diese Induktionsströme aufzufangen und abzuleiten

Gemäß einem weiteren Aspekt der vorliegenden Erfindung wird ein Verfahren zum Herstellen einer Befestigungsanordnung nach Anspruch 12 vorgeschlagen.

Aufnahmemitteln korrespondierend zu Aufnahmemitteln der Verbindungselemente und Verbinden der Halterschiene mit den Verbindungselementen.

Die Aufnahmemittel können dabei jeglicher Natur sein und müssen lediglich die Aufgabe erfüllen, mit einem anderen Element eine Verbindung herzustellen. Insbesondere könnten die Aufnahmemittel Aufnahmebohrungen sein, die zum Durchstecken von Bolzen, Nieten oder anderen form- oder kraftschlüssigen Verbindungsmitteln geeignet sind. Dies bedeutet, dass Bohrungen von den Verbindungselementen bündig an Bohrungen des Basiselements angeordnet werden und durch die Bohrungen anschließend passende Verbindungsmittel getrieben werden, so dass zwar eine schwenkbare, aber dennoch positionsunveränderliche Verbindung des Basiselements und der Verbindungselemente gewährleistet werden kann. Analog gilt dies für die Verbindung der Verbindungselemente mit der Halterschiene.

Diesen wesentlichen Verfahrensschritten können weitere Schritte zum Herstellen des Basiselements, der Verbindungselemente und der Halterschiene vorgehen. Im folgenden wird exemplarisch von der Verwendung von Faserverbundmaterialien für die Herstellung der Verbindungselemente und des Basiselements ausgegangen. So ist beispielsweise denkbar, das Basiselement durch Bereitstellen eines Fasergewebes oder Fasergeleges, das Drapieren eines Fasergewebes in einer entsprechenden Form und das anschließende Aushärten herzustellen. Die Aufnahmemittel können während des Drapiervorgangs etwa in Form von Aufnahmebuchsen oder dergleichen eingesetzt werden, alternativ dazu können auch Aufnahmebohrungen oder Ausnehmungen nach Aushärtung des Basiselements durch herkömmliche Materialbearbeitungsverfahren angefertigt werden.

Gleiches gilt für die Herstellung der Verbindungselemente, bei denen während des Drapiervorgangs beispielsweise Aufnahmebuchsen integriert und dann fest einlaminiert werden könnten.

Die Halterschiene könnte aus einem metallischen Werkstoff bestehen, der mit den herkömmlichen Materialbearbeitungsverfahren hergestellt werden kann, etwa durch Strangziehen, anschließendes Fräsen und Anfertigen von Aufnahmemitteln, etwa durch Bohren, Fräsen, Schleifen oder durch Ansetzen von separaten Elementen.

Gemäß einem weiteren Aspekt der vorliegenden Erfindung wird auch ein Flugzeug mit einem Flugzeugrumpf, einem oder mehreren an dem Flugzeugrumpf angeordneten Befestigungsanordnungen den Bedarf erfüllen, so dass Einbauobjekte besonders flexibel und ohne wesentliche Beeinträchtigung der Primärstruktur befestigt werden können.

### KURZE BESCHREIBUNG DER ZEICHNUNGEN

Weitere Merkmale, Vorteile und Anwendungsmöglichkeiten der vorliegenden Erfindung ergeben sich aus der nachfolgenden Beschreibung der Ausführungsbeispiele und den Figuren. Dabei bilden alle beschriebenen und/oder bildlich dargestellten Merkmale für sich und in beliebiger Kombination den Gegenstand der Erfindung auch unabhängig von ihrer Zusammensetzung in den einzelnen Ansprüchen oder deren Rückbeziehungen. In den Figuren stehen weiterhin gleiche Bezugszeichen für gleiche oder ähnliche Objekte.
Fig. 1 zeigt in einer dreidimensionalen Ansicht eine erfindungsgemäße Befestigungsanordnung an einem Flugzeugrumpf.
Fig. 2a und 2b zeigen Verbindungselemente sowie eine Einsatzbuchse eines Verbindungselements in einem Längsschnitt.
Fig. 3 zeigt schematisch die Ausgleichsbewegung bei Belastung eines Verbindungselements.
Fig. 4 ein Flugzeug, das mit mindestens einer erfindungsgemäßen Befestigungsanordnung ausgerüstet ist.
Fig. 5 zeigt eine schematische Ansicht eines Vorgangs zum Herstellen eines Verbindungselements.
Fig. 6 zeigt in einer schematischen Blockansicht das erfindungsgemäße Verfahren zum Herstellen einer Befestigungsanordnung.
Fig. 7 zeigt ein zusätzliches Ausführungsbeispiel einer erfindungsgemäßen Befestigungsanordnung mit einer Rasterschiene.
Fig. 8a und b zeigen zusätzliche Ausführungsbeispiele einer erfindungsgemäßen Befestigungsanordnung mit Rasterschiene und Kabelhaltern.
Fig. 9 zeigt eine Durchführung eines Klimarohrs durch zwei benachbarte erfindungsgemäße Befestigungsanordnungen.
Fig. 10 zeigt ein Über-Kopf-Staufach, das an einer erfindungsgemäßen Befestigungsanordnung befestigt ist.
Fig. 11 zeigt ein Monument einer Fahrzeugkabine, das an einer erfindungsgemäßen Befestigungsanordnung befestigt ist.

### DETAILLIERTE DARSTELLUNG EXEMPLARISCHER

### AUSFÜHRUNGSBEISPIELE

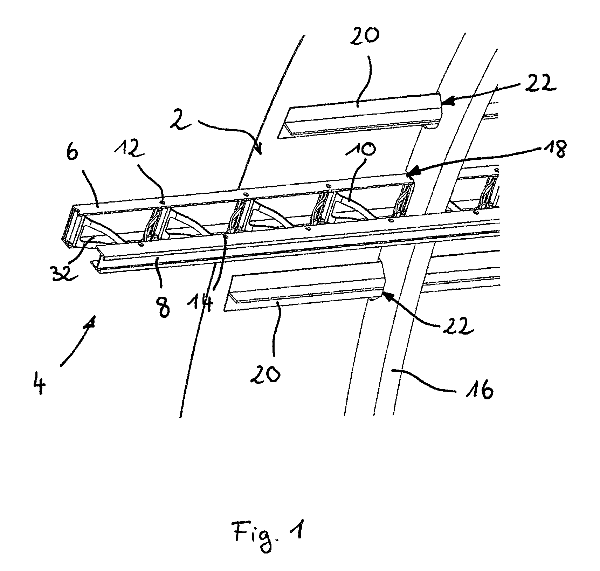

Fig. 1 zeigt einen Teil eines Flugzeugrumpfs 2, auf dem eine erfindungsgemäße Befestigungsanordnung 4 angeordnet ist. Die erfindungsgemäße Befestigungsanordnung 4 besteht aus einem Basiselement 6, einer exemplarischen Halterschiene 8 mit Doppel-T-Profil und dazwischen angeordneten Verbindungselementen 10. Das Basiselement 6 und die Halterschiene 8 verlaufen in dem gezeigten Beispiel in Fig. 1 parallel zueinander und werden durch die Verbindungselemente 10 auf Abstand gehalten und mechanisch miteinander verbunden. Das Basiselement 6 weist Aufnahmemittel 12 auf, die in Form von Aufnahmebohrungen realisiert sind. Die Halterschiene 8 weist ebenfalls exemplarisch als Aufnahmebohrungen ausgeführte Aufnahmemittel 14 auf.

Ferner ist an dem Rumpf 2 ein Spant 16 zu sehen, der eine im Wesentlichen ringförmige Struktur aufweist und quer zur Längsachse des Rumpfs 2 angeordnet ist. Zum Ermöglichen der Befestigung der erfindungsgemäßen Befestigungsanordnung 4 weist der Spant 16 mindestens eine exemplarisch als Durchgangsloch ausgeführte Ausnehmung 18 auf, welches häufig auch "mousehole" genannt wird.

Zusätzlich werden exemplarisch zwei Längsversteifungselemente 20 parallel zu der erfindungsgemäßen Befestigungsanordnung 4 angeordnet und ebenfalls durch entsprechende Ausnehmungen 22 des Spants 16 geführt werden. Die Längsversteifungselemente 20 werden auch "Stringer" genannt und sind für die erfindungsgemäße Befestigungsanordnung nicht relevant.

Durch die erfindungsgemäße Befestigungsanordnung 4 können Baueinheiten in einem Flugzeugrumpf 2 befestigt werden, ohne dass die einzubauenden Baueinheiten mittels einer Vielzahl von unterschiedlichen Haltern direkt an der Primärstruktur angeordnet sind. Die Berücksichtigung der jeweiligen Geometrie von Spanten 16 und Stringern 20 sowie deren Abstände zueinander sind nicht mehr relevant.

Die erfindungsgemäße Befestigungsanordnung 4 kann auf vielfältige Weise an dem Rumpf 2 angeordnet werden. Beispielsweise wäre es möglich, das Basiselement 6 mit in einen aus einem Faserverbundmaterial hergestellten Flugzeugrumpf 2 bei dessen Herstellung einzulaminieren, andererseits wäre auch ein Kleben, Nieten, Schrauben oder eine Befestigung durch eine alternative Befestigungsmethode denkbar, hier sind dem Fachmann keine Grenzen gesetzt. Abhängig von der Materialgestaltung des Basiselements 6 käme auch ein Schweißen in Betracht, etwa wenn das Basiselement 6 und der Flugzeugrumpf 2 aus Aluminium oder einem anderen in der Luftfahrt verwendeten metallischen Werkstoff hergestellt sind.

Durch die Entkopplung der Halterschiene 8 von der Primärstruktur des Flugzeugs ist eine völlig flexible Halterung von Baueinheiten ermöglicht, ohne auf typenspezifische Spant- oder Stringer-Abstände angewiesen zu sein. Gleichzeitig ist durch die Entkopplung auch gewährleistet, dass sich unterschiedliche Wärmeausdehnungen zwischen der Halterschiene 8 und dem Basiselement 6 bzw. von den einzubauenden Objekten selbst derart berücksichtigt, dass lediglich recht geringe Wärmespannungen in die Primärstruktur eingebracht werden. Die Verbindungselemente 10 sind durch ihre spezifische Form dazu eingerichtet, einen großen Anteil derartiger Wärmespannungen aufzunehmen.

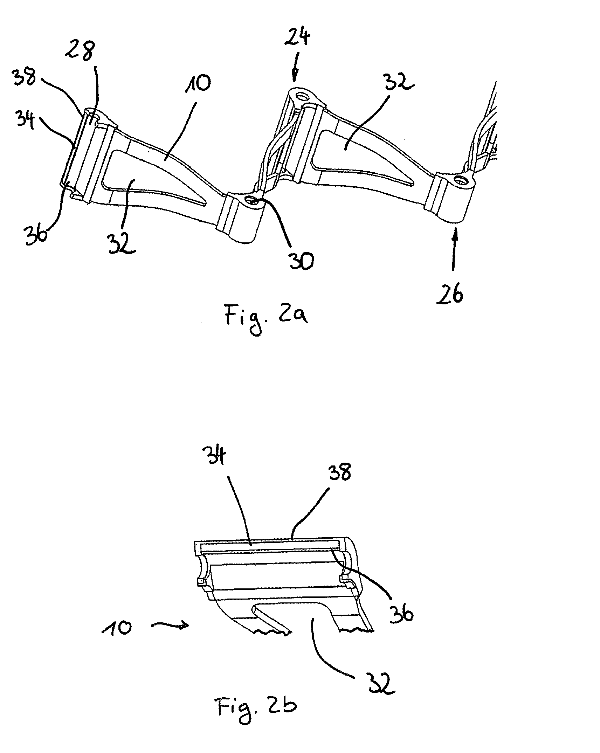

In Fig. 2a wird die spezifische Form der Verbindungselemente 10 näher dargestellt. Die Verbindungselemente 10 weisen erste Enden 24 und zweiten Enden 26 auf, wobei die ersten Enden 24 zum Befestigen der Verbindungselemente 10 mit dem Basiselement 6 und die zweiten Enden 26 zum Verbinden mit der Halterschiene 8 eingerichtet sind. Hierzu weisen die Verbindungselemente 10 Aufnahmebuchsen 28 und 30 auf, durch die Bolzen, Niete oder dergleichen geführt werden. Die Aufnahmebuchsen 28 und 30 werden zu den Aufnahmemitteln 12 und 14 des Basiselements 6 und der Halterschiene 8 korrespondierend angeordnet.

In der beispielhaften Darstellung verjüngen sich die Verbindungselemente 10 ausgehend von ihren ersten Enden 24 zu ihren zweiten Enden 26 hin. Dadurch kann gewährleistet werden, dass ein möglichst großes Flächenträgheitsmoment im Bereich des Basiselements 6 vorliegt, um besonders die Belastungen in der y-Achse des Flugzeugs aufzunehmen. Aus Gewichtsgründen sind die gezeigten Verbindungselemente 10 ferner mit einer Ausnehmung 32 ausgestattet, so dass die Verbindungselemente 10 im Wesentlichen eine Dreiecksform besitzen.

Es wird hier weiterhin deutlich, dass die Verbindungselemente 10 eine sogenannte "S-Schlag-Form" aufweisen, die ein Einnehmen einer vordefinierten Knick- und Biegeposition ermöglicht.

In Fig. 2b wird eine Aufnahmebuchse 28 eines ersten Endes 24 eines Verbindungselements 10 näher dargestellt, die beispielhaft an einer Schlaufe 34 aus einem Faserverbundmaterial angeordnet sein könnte und aus zwei beidseitig der Schlaufe 34 angeordneten Buchsenhälften 36 und 38 besteht.

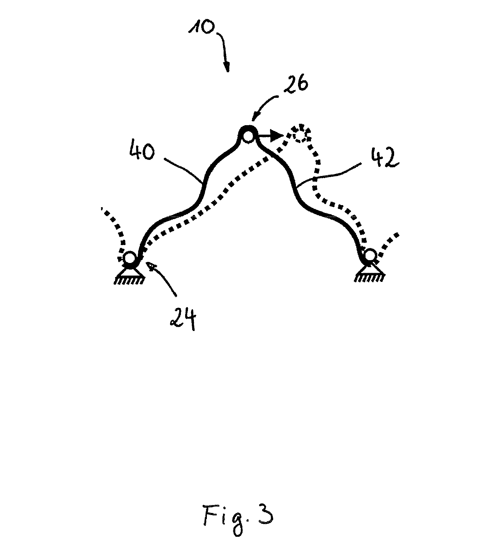

In Fig. 3 wird schematisch dargestellt, wie sich ein erfindungsgemäßes Verbindungselement 10 verformt, sobald eine Kraft auf das zweite Ende 26 wirkt.

Durch die "S-Schlag-Form" erfolgt eine Streckung eines ersten Beins 40 sowie eine Beugung eines zweiten Beins 42, wobei die Art der Beugung durch die Formgebung des zweiten Beins 42 selbst bereits vorgegeben ist und durch Aufwendung einer Kraft lediglich in ihrer Amplitude verstärkt wird. Dadurch ist eine besonders genaue Auslegung der Materialeigenschaften möglich, da beispielsweise keine Knickfälle mit unvorhersehbarer Knickrichtung eintreten.

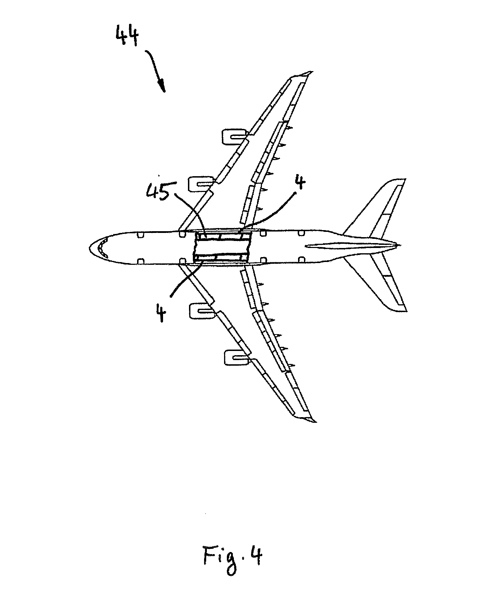

Fig. 4 zeigt ein Flugzeug 44, das mit mehreren erfindungsgemäßen Befestigungsanordnungen 4 ausgerüstet ist, an der exemplarisch mehrere Baueinheiten 45 in Form von Über-Kopf-Staufächern angeordnet sind.

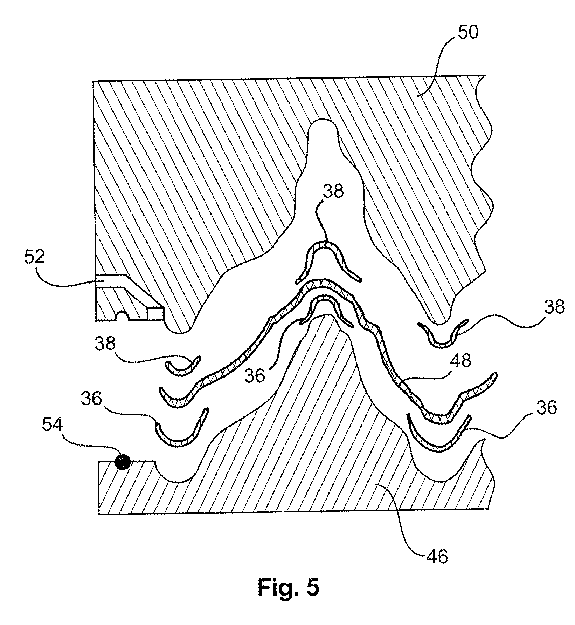

Fig. 5 zeigt in einer schematischen Ansicht den Vorgang des Herstellens eines Verbindungselements 10 der erfindungsgemäßen Befestigungsanordnung. Bei einem beispielhaft zur Herstellung angewendeten Harzinfusionsverfahren mit einer geschlossenen Form könnten dabei zuerst die unteren Buchsenhälften 36 in eine entsprechend gestaltete untere Werkzeugformhälfte 46 eingelegt werden. Anschließend wäre es möglich, ein vorher zugeschnittenes Faser-Halbzeug 48 auf die untere Werkzeugformhälfte 46 und auf die unteren Buchsenhälften 36 zu drapieren. Danach können obere Buchsenhälften 38 auf die unteren Buchsenhälften 36 und das darüber liegende Faser-Halbzeug 48 gesteckt werden. Anschließend könnte eine obere Werkzeughälfte 50 auf die gelegte/drapierte Anordnung gesetzt werden, um ein geschlossenes Werkzeug herzustellen. Durch ein exemplarisch angewandtes, bekanntes Harzinfusionsverfahren (auch als "Resin Transfer Moulding" bzw. RTM bekannt) wird Harz durch einen Einlass 52 gefüllt. Die Verbindung der oberen und unteren Buchsenhälften 36 und 38 kann dabei entweder vor der Harzinfusion beispielsweise durch Kleben, Löten oder andere geeignete Fügeverfahren erfolgen. Alternativ kann die Fügung durch Einbringen des Infusionsharzes zwischen die Fügeflächen der Buchsenhälften 36 und 38 erfolgen.

Diese könnten dafür entsprechende Abstand haltende Elemente aufweisen um einen konstanten Abstand der Fügeflächen der Buchsenhälften 36 und 38 sicherzustellen. Diese hätten beispielsweise die Form kleiner, definiert hoher Erhebungen auf den Fügeflächen. Mit einer Dichtung 54 wird schließlich sichergestellt, dass kein Harz austreten kann. Nach einer anschließenden Aushärtung kann das Verbindungselement 10 entnommen werden.

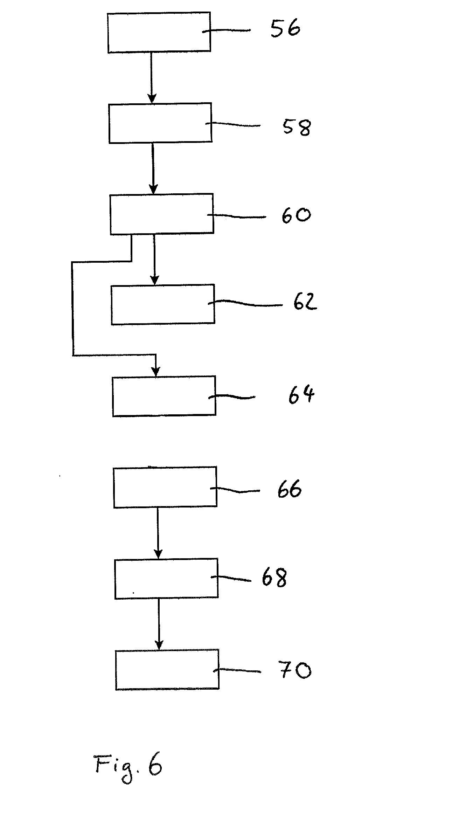

Weiterhin zeigt Fig. 6 ein erfindungsgemäßes Verfahren in einer schematischen Ansicht, wobei das Verfahren im Wesentlichen die folgenden Schritte umfasst. Nach dem Bestücken 56 einer unteren Werkzeughälfte 46 mit unteren Buchsenhälften 36 erfolgt das Drapieren 58 eines Faserhalbzeuges 48 auf die untere Werkzeughälfte 46 und untere Buchsenhälften 36, das Aufstecken 60 von oberen Buchsenhälften 38 auf untere Buchsenhälften 36 und das darüber liegende Faserhalbzeug 48 und gegebenenfalls das Aufbringen 62 von Fügemitteln. Schließlich erfolgt das Verschließen 64 der Form mit einer oberen Werkzeughälfte 50, die Infusion 66 eines Matrixmaterials, etwa ein Harz, das Aushärten 68 und schließlich eine Entformung 70.

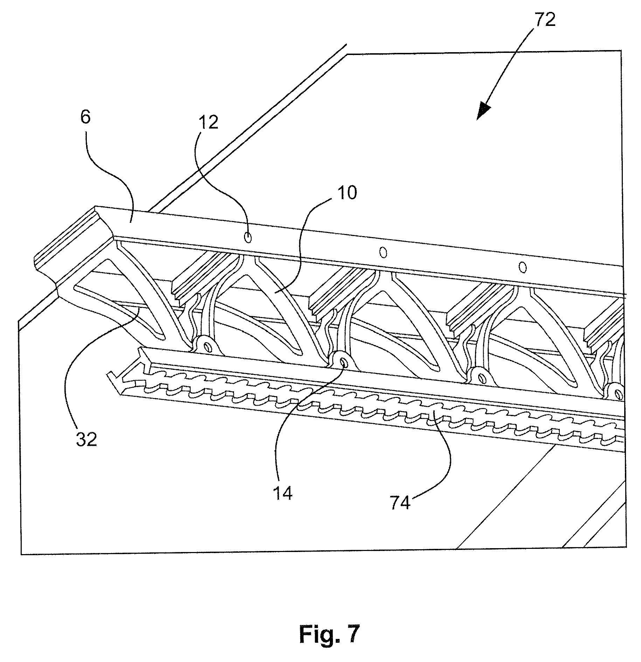

Fig. 7 zeigt als weiteres Ausführungsbeispiel eine erfindungsgemäße Befestigungsanordnung 72, bei der die Halterschiene als Rasterschiene 74 ausgeführt ist. Die Rasterschiene 74 könnte beispielsweise einer üblichen Sitzschiene von Flugzeugkabinen entsprechen, die eine Rasterung in 1-Zoll-Abständen aufweist. Besonders vorteilhaft ist hier die Möglichkeit, geeignete Einsatzstücke in die Rasterschiene 74 einzuführen, entlang ihrer Erstreckung zu verschieben und an einem gewünschten Ort durch Verschrauben oder dergleichen in einem vorgegebenen Raster befestigen zu können. Für die Halterung von Baueinheiten können dementsprechend bereits bekannte Befestigungsvorrichtungen bzw.

Befestigungselemente eingesetzt werden, die aus der Verwendung von Sitzschienen in Fahrzeugkabinen technisch ausgereift sind.

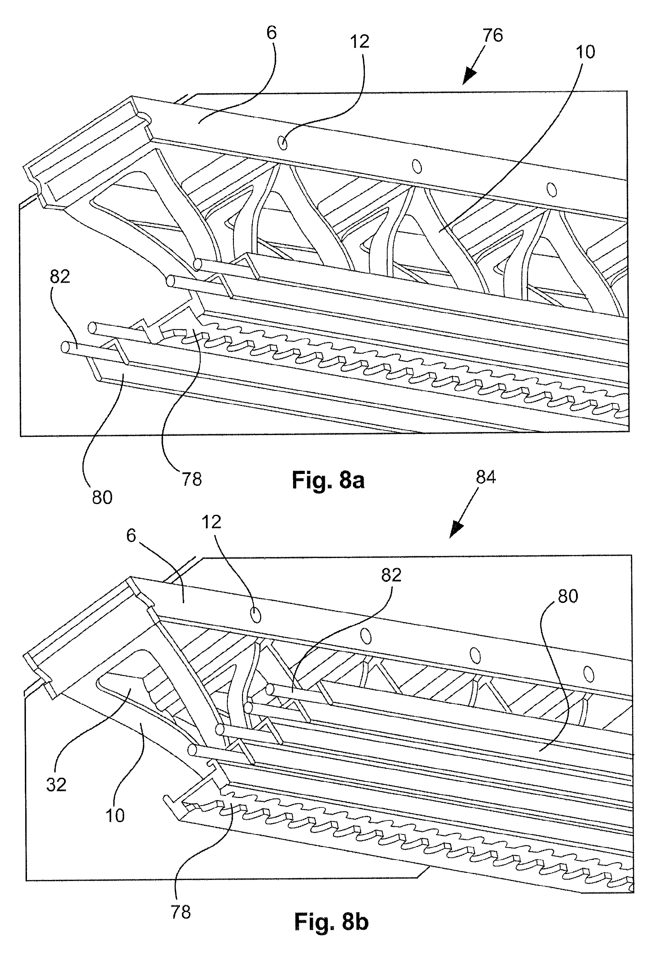

In den Fig. 8a und 8b werden weitere erfindungsgemäße Befestigungsanordnungen 76 und 84 gezeigt, bei denen eine Rasterschiene 78 längliche und parallel zu der Rasterung verlaufende Kanäle 80 zum Durchführen von Kabeln 82 aufweisen. Hierdurch können Kabelhalter und Befestigungsanordnung sehr leicht miteinander kombiniert werden, wobei die durchgeführten Kabel 82 beispielsweise mit Kabelbindern entlang der Rasterschiene 78 in den Kanälen 80 befestigt werden können.

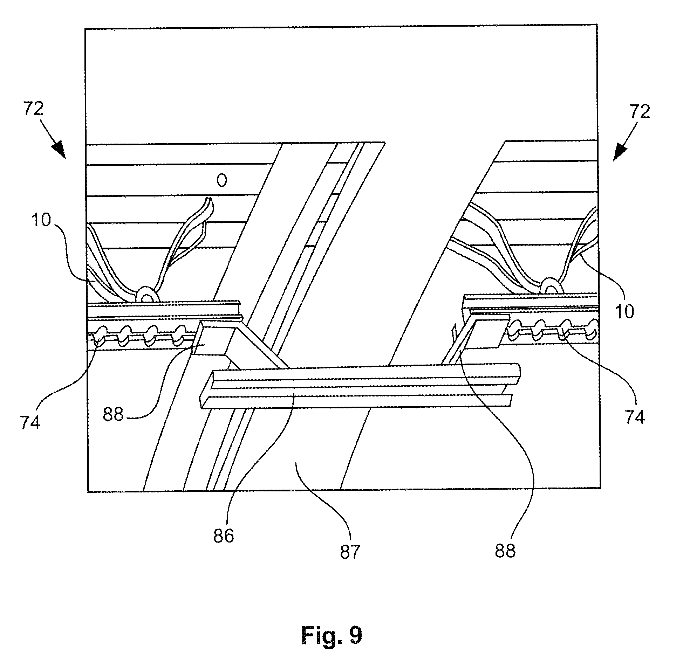

In Fig. 9 wird eine Einbausituation mit zwei erfindungsgemäßen Befestigungsanordnungen 72 gezeigt, zwischen denen eine Überbrückungsschiene 86 an zwei Winkelhaltern 88 angeordnet ist, um ein Klimarohr 87 oder dergleichen durchführen zu können.

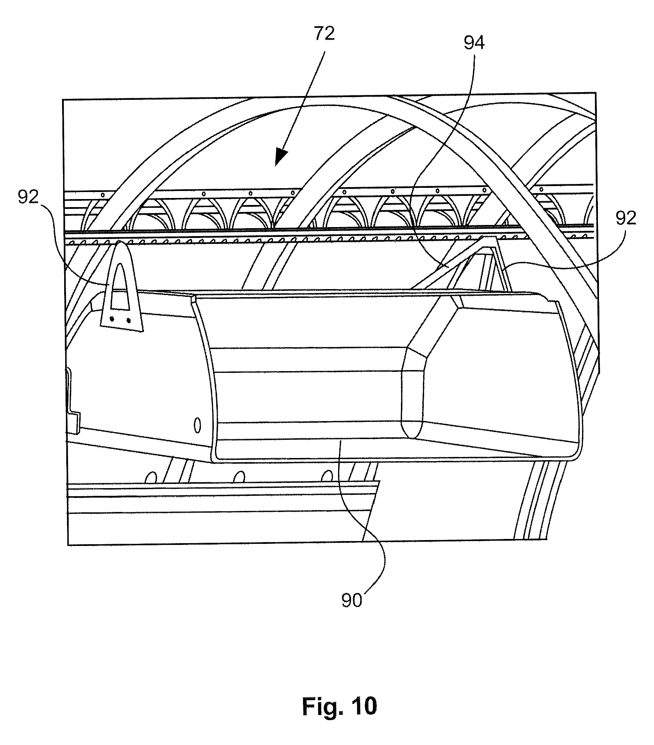

In Fig. 10 ist eine Einbausituation eines Über-Kopf-Staufachs 90 gezeigt, das an einer erfindungsgemäßen Befestigungsanordnung 72 angeordnet ist. An einer Oberseite des Staufachs 90 befinden sich zwei Winkelträger 92 und 96, die in die Rasterschiene 78 der erfindungsgemäßen Befestigungsanordnung 72 eingreifen können. Zur Gewährleistung einer ausreichenden Stabilität in Längsrichtung ist zusätzlich eine Diagonalstrebe 94 an dem bezüglich der Fahrt- bzw. Flugrichtung hinteren Winkelträger 92 angeordnet.

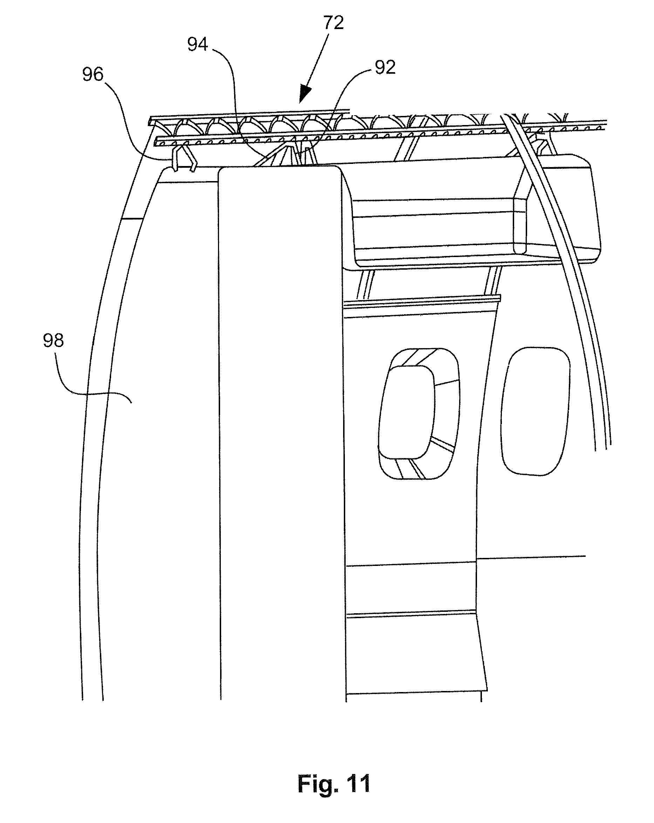

In Fig. 11 wird schließlich gezeigt, wie auch Monumente 98 innerhalb einer Flugzeug- oder Fahrzeugkabine an einer erfindungsgemäßen Befestigungsanordnung 72 angeordnet werden können. Hier werden beispielhaft zwei Winkelstreben 92 und 96 sowie eine Diagonalstrebe 94 eingesetzt, die eine raumfeste Positionierung des Monuments 98 ermöglichen.

Ergänzend sei darauf hinzuweisen, dass "aufweisend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

### BEZUGSZEICHEN

- 2: Flugzeugrumpf
- 4: Befestigungsanordnung
- 6: Basiselement
- 8: Halterschiene
- 10: Verbindungselement
- 12: Aufnahmemittel
- 14: Aufnahmemittel
- 16: Spant
- 18: Ausnehmung
- 20: Längsversteifungselement
- 22: Ausnehmung
- 24: erstes Ende
- 26: zweites Ende
- 28: Aufnahmebuchse
- 30: Aufnahmebuchse
- 32: Ausnehmung
- 34: Schlaufe
- 36: Buchsenhälfte
- 38: Buchsenhälfte
- 40: erstes Bein
- 42: zweites Bein
- 44: Flugzeug
- 45: Baueinheit
- 46: untere Werkzeugformhälfte
- 48: Faser-Halbzeug
- 50: obere Werkzeughälfte
- 52: Einlass
- 54: Dichtung
- 56: Bestücken
- 58: Drapieren
- 60: Aufstecken
- 62: Aufbringen von Fügemittel
- 64: Verschließen
- 66: Infusion
- 68: Aushärten
- 70: Entformung
- 72: Befestigungsanordnung
- 74: Halterschiene als Rasterschiene
- 76: Befestigungsanordnung
- 78: Halterschiene als Rasterschiene
- 80: Kanal
- 82: Kabel
- 84: Befestigungsanordnung
- 86: Überbrückungsschiene
- 87: Klimarohr
- 88: Winkelträger
- 90: Über-Kopf-Staufach
- 92: Winkelstrebe
- 94: Diagonalstrebe
- 96: Winkelstrebe
- 98: Monument

## Patentansprüche

1. Befestigungsanordnung (4, 72, 76, 84) zum Befestigen von Baueinheiten (45) in einem Rumpf eines Fahrzeugs, aufweisend
- mindestens ein längliches Basiselement (6),
- mindestens eine Halterschiene (8, 74, 78) und
- Verbindungselemente (10),
wobei das Basiselement (6) dazu eingerichtet ist, direkt an dem Rumpf des Fahrzeugs angeordnet zu werden und die Funktion eines Längsversteifungselements für den Rumpf zu übernehmen,
wobei die Halterschiene (8, 74, 78) zum Befestigen der Baueinheiten (45) eingerichtet ist,
wobei das Basiselement (6) und die Halterschiene (8, 74, 78) durch die Verbindungselemente (10) voneinander beabstandet verbunden sind, wobei jedes Verbindungselement ein erstes Ende (24) und ein zweites Ende (26) sowie eine vom ersten Ende (24) zum zweiten Ende (26) hin sich verjüngende Form aufweist und
wobei zwei erste Enden (24) zweier benachbarter Verbindungselemente (10) an dem gleichen Punkt des Basiselements (6) angeordnet sind und wobei zwei zweite Enden eines hiervon benachbarten Paars von Verbindungselementen (10) an einem gemeinsamen Punkt der Halterschiene (8, 74, 78) angeordnet sind,
**dadurch gekennzeichnet dass**, das Verformungsverhalten der Verbindungselemente (10) durch eine geometrische Vorkrümmung vordefiniert ist.

2. Befestigungsanordnung (4, 72, 76, 84) nach Anspruch 1, wobei die Verbindungselemente (10) mit ihren zweiten Enden (26) an der Halterschiene (8, 74, 78) unter Bildung einer fachwerkartigen Struktur.

3. Befestigungsanordnung (4, 72, 76, 84) nach Anspruch 1 oder 2, wobei jeweils Paare von Verbindungselementen (10) mit zueinander gewandten zweiten Enden (26) und auseinander gewandten ersten Enden (24) und jeweils zumindest ein Bereich der Verbindungselements (24) konvex gekrümmt sind.

4. Befestigungsanordnung (4, 72, 76, 84) nach Anspruch 3, wobei ein erster Bereich jeweils eines Verbindungselements (10) konvex und ein zweiter Bereich konkav gekrümmt ist, so dass das Verbindungselement (10) eine S-Form aufweist.

5. Befestigungsanordnung (4, 72, 76, 84) nach einem der vorhergehenden Ansprüche, wobei die Verbindungselemente (10) ferner jeweils mindestens eine Ausnehmung (32) aufweisen.

6. Befestigungsanordnung (4, 72, 76, 84) nach einem der vorhergehenden Ansprüche, wobei die Verbindungselemente (10) an ihren ersten Enden (24) und/oder zweiten Enden (26) Einsatzbuchsen (28, 30) aufweisen.

7. Befestigungsanordnung (4, 72, 76, 84) nach einem der vorhergehenden Ansprüche, wobei jeweils Paare von Verbindungselementen (10) gebildet sind, die an ihren ersten Enden (24) oder zweiten Enden (26) miteinander verbunden sind und an diesen gemeinsamen Enden jeweils eine Einsatzbuchse (28, 30) aufweisen.

8. Befestigungsanordnung (4, 72, 76, 84) nach einem der vorhergehenden Ansprüche, wobei die Verbindungselemente (10) aus einem Faserverbundmaterial bestehen.

9. Befestigungsanordnung (4) nach einem der vorhergehenden Ansprüche, wobei das Basiselement (6) aus einem Faserverbundmaterial besteht.

10. Befestigungsanordnung (4, 72, 76, 84) nach einem der vorhergehenden Ansprüche, wobei die Halterschiene (8, 74, 78) aus einem metallischem Werkstoff besteht.

11. Befestigungsanordnung (4, 72, 76, 84) nach einem der vorhergehenden Ansprüche, wobei mehrere Verbindungselemente (10) zu einem einstückigen Bauteil zusammengefasst sind.

12. Verfahren zum Herstellen einer Befestigungsanordnung (2) nach einem der Ansprüche 1 bis 11, aufweisend die Schritte:
- Bestücken (56) einer unteren Werkzeughälfte (46) mit unteren Buchsenhälften (36);
- Drapieren (58) eines Faserhalbzeuges auf die untere Werkzeughälfte (46) und die unteren Buchsenhälften (36);
- Aufstecken (60) der oberen Buchsenhälften (38) auf die unteren Buchsenhälften (36);
- Aufsetzen (64) einer oberen Werkzeughälfte (50) auf die untere Werkzeughälfte (46);
- Infusion (66) eines Matrixmaterials;
- Aushärten (68) eines oder mehrerer Verbindungselemente (10) und
- Entformen (70) der Verbindungselemente (10).

13. Verfahren nach Anspruch 12, ferner aufweisend die Schritte:
- Befestigen der Verbindungselemente (10) an einem Basiselement (6) und
- Anordnen einer Halterschiene (8, 74, 78) an den Verbindungselementen (10).

14. Flugzeug mit mindestens einem Rumpf (2), mindestens einer in diesem Rumpf (2) befestigten Befestigungsanordnung (4, 72, 76, 84) nach einem der Ansprüche 1 bis 11 und mindestens einer an der Befestigungsanordnung (4, 72, 76, 84) befestigten Baueinheit (45).

## Claims

1. A mounting assembly (4, 72, 76, 84) for mounting components (45) in a fuselage of a vehicle, comprising:
- at least one elongate base element (6),
- at least one holder rail (8, 74, 78) and
- connecting elements (10),
wherein the base element (6) is adapted to be arranged directly on the fuselage of the vehicle and to take over the function of a longitudinal stiffening element for the fuselage,
wherein the holder rail (8, 74, 78) is adapted for fastening the components (45), wherein the base element (6) and the holder rail (8, 74, 78) are connected to one another at a distance through the connecting elements (10), wherein each connecting element comprises a first end (24) and a second end (26) as well as a shape that tapers from the first end (24) to the second end (26) and
wherein two first ends (24) of two adjacent connecting elements (10) are arranged at the same point of the base element (6) and wherein two second ends of an adjacent pair of connecting elements (10) are arranged at a common point of the holder rail (8, 74, 78),
**characterized in that** the deformation behaviour of the connecting elements (10) is predefined by a geometric pre-curvature.

2. Mounting assembly (4, 72, 76, 84) according to claim 1, wherein the connecting elements (10) are mounted to the holder rail (8, 74, 78) with their second ends (26) under creation of a framework-like structure.

3. Mounting assembly (4, 72, 76, 84) according to claim 1 or 2, wherein individual pairs of connecting elements (10) with second ends (26) facing to each other and first ends (24) facing away from each other and at least a region of the connecting elements (24) comprise a convex curvature.

4. Mounting assembly (4, 72, 76, 84) of claim 3, wherein a first region of a respective connecting element (10) comprises a convex curvature, and a second region comprises a concave curvature, such that the connecting element (10) is S-shaped.

5. Mounting assembly (4, 72, 76, 84) according to any of the preceding claims, wherein the connecting elements (10) each comprise at least one recess (32).

6. Mounting assembly (4, 72, 76, 84) according to any of the preceding claims, wherein the connecting elements (10) comprise insert sleeves (28, 30) at their first ends (24) and/or second ends (26).

7. Mounting assembly (4, 72, 76, 84) according to any of the preceding claims, wherein individual pairs of connecting elements (10) are created, which are connected to each other at their first ends (24) or their second ends (26) und at these common ends in each case comprise an insert sleeve (28, 30).

8. Mounting assembly (4, 72, 76, 84) according to any of the preceding claims, wherein the connecting elements (10) consist of a fiber-reinforced composite material.

9. Mounting assembly (4) according to any of the preceding claims, wherein the base element (6) consists of a fiber-reinforced composite material.

10. Mounting assembly (4, 72, 76, 84) according to any of the preceding claims, wherein the holder rail (8, 74, 78) consists of a metallic material.

11. Mounting assembly (4, 72, 76, 84) according to any of the preceding claims, wherein a plurality of connecting elements (10) are combined to form a single-piece component.

12. Method for producing a mounting assembly (2) according to any of the preceding claims 1 to 11, comprising the steps of:
- equipping (56) a lower mold half (46) with lower sleeve halves (36);
- draping (58) a semi-finished fiber material over the lower mold half (46) and over the lower sleeve halves (36);
- plugging (60) upper sleeve halves (38) onto the lower sleeve halves (36);
- placing (64) an upper mold half (50) onto the lower mold half (46);
- infusing (66) a matrix material;
- curing (68) one or more connecting elements (10); and
- demolding (70) the connecting elements (10).

13. Method according to claim 12, further comprising the steps:
- mounting the connecting elements (10) on a base element (6); and
- arranging a holder rail (8, 74, 78) on the connecting elements (10).

14. Aircraft, comprising at least one fuselage (2), at least one mounting assembly (4, 72, 76, 84) according to any of the claims 1 to 11 mounted the fuselage (2) and at least one component mounted on the mounting assembly (4, 72, 76, 84).

## Revendications

1. Agencement de fixation (4, 72, 76, 84) pour fixer des unités modulaires (45) dans un fuselage d'un véhicule, comportant
- au moins un élément de base (6) allongé,
- au moins un rail de support (8, 74, 78) et
- des éléments de liaison (10),
l'élément de base (6) étant apte à être disposé directement sur le fuselage du véhicule et à assumer la fonction d'un élément de renforcement longitudinal pour le fuselage, le rail de support (8, 74, 78) étant apte à fixer les unités modulaires (45),
l'élément de base (6) et le rail de support (8, 74, 78) étant reliés par les éléments de liaison (10) de manière espacée l'un de l'autre, chaque élément de liaison comportant une première extrémité (24) et une seconde extrémité (26) ainsi qu'une forme s'amincissant de la première extrémité (24) à la seconde extrémité (26) et
deux premières extrémités (24) de deux éléments de liaison (10) voisins étant disposées sur le même point de l'élément de base (6) et deux secondes extrémités d'une paire d'éléments de liaison (10) adjacente de ceux-ci étant disposées sur un point commun du rail de support (8, 74, 78),
**caractérisé en ce que**
le comportement en déformation des éléments de liaison (10) est prédéfini par un précintrage géométrique.

2. Agencement de fixation (4, 72, 76, 84) selon la revendication 1, dans lequel les éléments de liaison (10) sont disposés avec leurs deux extrémités (26) sur le rail de support (8, 74, 78) en formant une structure en treillis.

3. Agencement de fixation (4, 72, 76, 84) selon la revendication 1 ou 2, dans lequel respectivement des paires d'éléments de liaison (10) avec des secondes extrémités (26) tournées l'une vers l'autre et des premières extrémités (24) opposées l'une à l'autre et respectivement au moins une zone des éléments de liaison (24) sont incurvées de manière convexe.

4. Agencement de fixation (4, 72, 76, 84) selon la revendication 3, dans lequel une première zone de chaque élément de liaison (10) est incurvée de manière convexe et une seconde zone de manière concave, de telle sorte que l'élément de liaison (10) présente une forme de S.

5. Agencement de fixation (4, 72, 76, 84) selon l'une des revendications précédentes, dans lequel les éléments de liaison (10) comportent en outre respectivement au moins un évidement (32).

6. Agencement de fixation (4, 72, 76, 84) selon l'une des revendications précédentes, dans lequel les éléments de liaison (10) comportent des douilles d'insertion (28, 30) sur leurs premières extrémités (24) et/ou secondes extrémités (26).

7. Agencement de fixation (4, 72, 76, 84) selon l'une des revendications précédentes, dans lequel des paires d'éléments de liaison (10) sont respectivement formées, qui sont reliées ensemble à leurs premières extrémités (24) ou secondes extrémités (26) et qui comportent respectivement une douille d'insertion (28, 30) sur ces extrémités communes.

8. Agencement de fixation (4, 72, 76, 84) selon l'une des revendications précédentes, dans lequel les éléments de liaison (10) se composent d'un matériau composite renforcé par des fibres.

9. Agencement de fixation (4) selon l'une des revendications précédentes, dans lequel l'élément de base (6) se compose d'un matériau composite renforcé par des fibres.

10. Agencement de fixation (4, 72, 76, 84) selon l'une des revendications précédentes, dans lequel le rail de support (8, 74, 78) se compose d'un matériau métallique.

11. Agencement de fixation (4, 72, 76, 84) selon l'une des revendications précédentes, dans lequel plusieurs éléments de liaison (10) sont réunis en un élément en une seule pièce.

12. Procédé de fabrication d'un agencement de fixation (2) selon l'une des revendications 1 à 11, comportant les étapes consistant à :
- équiper (56) une moitié inférieure d'outil (46) de moitiés inférieures de douille (36) ;
- draper (58) une produit semi-fini à base de fibres sur la moitié inférieure d'outil (46) et les moitiés inférieures de douille (36) ;
- emboîter (60) les moitiés supérieures de douille (38) sur les moitiés inférieures de douille (36) ;
- placer (64) une moitié supérieure d'outil (50) sur la moitié inférieure d'outil (46) ;
- infuser (66) un matériau de matrice ;
- faire durcir (68) un ou plusieurs éléments de liaison (10) et
- démouler (70) les éléments de liaison (10).

13. Procédé selon la revendication 12, comportant en outre les étapes consistant à :
- fixer les éléments de liaison (10) à un élément de base (6) et
- disposer un rail de support (8, 74, 78) sur les éléments de liaison (10).

14. Avion comprenant au moins un fuselage (2), au moins un agencement de fixation (4, 72, 76, 84) selon l'une des revendications 1 à 11 fixé dans ledit fuselage (2) et au moins une unité modulaire (45) fixée à l'agencement de fixation (4, 72, 76, 84).
